# EUROPEAN PATENT SPECIFICATION

(11) **EP 4 519 616 B1**
(45) Date of publication and mention of the grant of the patent: **21.10.2026**
(21) Application number: 23799377.9
(22) Date of filing: 18.01.2023
(51) Int. Cl.: F24S 30/458, H02S 20/10, F24S 25/00, F16B 9/00

(54) **MOUNT FOR VERTICAL PHOTOVOLTAIC MODULES**
HALTERUNG FÜR VERTIKALE FOTOVOLTAISCHE MODULE
SUPPORT POUR MODULES PHOTOVOLTAÏQUES VERTICAUX

(30) Priority: 03.05.2022 IL 29273622
(43) Date of publication of application: 12.03.2025
(73) Proprietor: Sun Terra Ltd., 9080400 Nataf (IL)
(72) Inventor: FINAROV, Moshe, Rehovot (IL); SHEINMAN, Yehoshua, 4359221 Ra'anana (IL)
(74) Representative: Barker Brettell LLP
(86) International application number: PCT/IL2023/050050
(87) International publication number: WO 2023/214396

(56) References cited:
- DE-A1- 10 121 437
- US-A1- 2011 005 583
- US-A1- 2020 153 380
- US-A1- 2020 153 380

## Description

### TECHNOLOGY FIELD

The present disclosure relates to the mounting of photovoltaic (PV) modules, particularly photovoltaic modules intended for dual use in agriculture and other areas.

### BACKGROUND

Photovoltaic (PV) modules or panels are widely used in roof-top and ground solar power installations. Usually, the photovoltaic modules installations are rows of photovoltaic modules or panels either slightly tilted or rotated at an angle to the South with some distance between the rows or fully horizontal photovoltaic modules in dense arrangements. This type of photovoltaic module installation is termed a North-South or N/S mounting or installation. The installation site latitude could require adjustments in photovoltaic panel orientation and the tilt angle. Recently bifacial photovoltaic modules with high bifaciality (>80%) have become available. The additional photovoltaic efficiency gain for these panels, 10% to 20% compared to the monofacial (single side) photovoltaic modules, depends on installation arrangement and the localized albedo.

Bifacial photovoltaic modules support a new type of installation of solar photovoltaic panels, namely vertical photovoltaic mounting (also termed East- West or E/W mounting), in the East- West photovoltaic panels installation, one side of the photovoltaic module collects sunlight before noon, and the other side of the photovoltaic module collects the sunlight afternoon.

U.S. Patent Application Publication No. 2020/0153380 Al to Heiko Hildebrandt et al. teaches "a photovoltaic system in which a plurality of bifacial photovoltaic modules can be mounted in a vertical arrangement and which satisfies the specific requirements of bifacial photovoltaic modules. In addition, the supporting structure is intended to have sufficient stability in typical weather conditions, particularly against the wind." US 2011/005583 A1 discloses a partially non-rigid solar capture mounting system which reduces the risk of damage due to wind. The solar capture mounting system includes at least one pole, a horizontal beam mounted to the pole, and at least one backing plate hanging from the horizontal beam via a pivotal connection.

In a paper presented at the 35th European Photovoltaic Solar Energy Conference and Exhibition (EU PVSEC 2018), Brussels, September 2018, titled "PERFORMANCE ANALYSIS OF VERTICALLY MOUNTED BIFACIAL PV MODULES ON GREEN ROOF SYSTEM" by Thomas Baumann et al., reported that "according to simulations, vertically mounted bifacial modules can have a higher electrical energy yield than standard bifacial installations depending on the location and the installation conditions."

The vertical photovoltaic panels type of installation with a significant distance between rows (6m -10m) of the photovoltaic panels is beneficial for dual use in agriculture because it supports a minimal photovoltaic panel footprint, leaving most of the ground area for agriculture needs between the rows. O.A. Katsikogiannis et al., in a paper titled "Integration of bifacial photovoltaics in agrivoltaic systems: A synergistic design approach", Applied Energy 309 (2022) 118475, analyzed different types of installations of bifacial PV modules. In particular, the authors emphasize that "East-West vertical topologies amplified light penetration, especially during the winter months; accordingly, they are preferable for the cultivation of permanent crops that are grown throughout the year, while South-North facing photovoltaic panels installations are more suitable for summer".

Additional advantages of the vertical photovoltaic modules include smaller shading, which is important for many crop types, e.g., for potatoes, and in parallel low contamination by air particles (as most of the air particles fall vertically on the ground), the vertical photovoltaic modules require less maintenance for cleaning.

A significant drawback of the existing vertical mounts is the high wind resistance. In the case of winds directed towards the PV modules, all the wind load is applied to the vertical mount (mainly to the posts and crossbeams), which holds the PV modules. To withstand the wind load by the mount, which should be designed to the maximum possible wind load in the installation site area, the mount construction and its anchoring to the ground should be sufficiently stiff. The stiffness requirement adds a significant additional cost to the mount that might limit the proliferation of such vertical PV installations or significantly reduce their economic profitability.

Worth to emphasize that there is a significant market segment of PV tracking systems in which different types of electro-mechanical drivers control the angular position of the PV panel. In such PV panel tracking systems, a built-in anemometer sensor communicating with a driver controller reduces the resistance to strong winds by locating the PV panel plane in a horizontal position. Such tracking systems are more expensive than vertically mounted PV systems and require significant maintenance caused by moving parts and higher panel contamination. Such PV tracking systems are less suitable for dual use applications like solar rows along roads and railways. The current disclosure presents an alternative solution to tracking systems. The alternative solution combines low cost and low resistance to strong winds.

The wind load on the tilted plane may be calculated according to the approach described in a paper titled: "THE FLIGHT OF WIND BORNE DEBRIS: AN EXPERIMENTAL, ANALYTICAL, AND NUMERICAL INVESTIGATION - PART III: CFD SIMULATIONS by Bruce Kakimpa et al. presented at The Seventh Asia-Pacific Conference on Wind Engineering, November 8-12, 2009, Taipei, Taiwan.

### DEFINITIONS

As the current disclosure, "bifaciality" defines the photovoltaic panel rear side efficiency ratio to the front side efficiency, measured under standard test conditions.

As used in the current disclosure, the tilt angle of the PV module is 0° when the photovoltaic module's plane is in the vertical plane, perpendicular to the ground.

The current disclosure uses the term horizontal plane, which means a virtual plane parallel to the ground; The tilt angle of the PV module plane in the vertical plane is ±90°, depending on the tilting direction.

As used in the current disclosure, a pivot is a rotation axis parallel to the ground and supporting PV module rotation relative to the vertical plane.

The term aerodynamic or flapping mount means a photovoltaic module mount supporting rotation of the photovoltaic module around a pivot under a wind load.

In the current disclosure, "about" means a deviation of +/ - 10% of the parameter from the original value.

### SUMMARY

According to the invention there is provided a vertically mounted photovoltaic system (claim 7) and a method of reducing the wind load resistance of a vertically mounted bifacial photovoltaic module (claim 1), as defined by the appended claims.

The present disclosure describes an aerodynamic photovoltaic vertically mounted system, including two vertical posts anchored to the ground for holding at least one vertical photovoltaic module at both sides, supporting the PV module's free rotation under a wind load. The wind load tilts the photovoltaic module around the pair of hinges into a position with reduced resistance to the wind load and reduces the drag force acting on the posts.

### LISTING OF DRAWINGS AND THEIR BRIEF DESCRIPTION

A reference is made to the accompanying drawings to better understand examples of the method and apparatus and illustrate how it could be carried into effect.
FIG. 1A is a schematic view of an example of a vertical photovoltaic module mount;
FIG. IB is a front view of the vertical photovoltaic module of FIG. 1A anchored in the ground;
FIG. 1C - is a front view of the vertical photovoltaic module of FIG. 1A anchored to a concrete pedestal;
FIG. 2 is a schematic view of a photovoltaic system according to the current disclosure, including three PV modules supported by two vertical posts;
FIG. 3A is a schematic presentation of the photovoltaic module position in the absence of a wind load;
FIG. 3B is a schematic illustration of the PV module position under a wind load, directed toward the PV module plane, and the forces applied to the PV module;
FIG. 4 shows PV module tilt angle at different wind speeds for an exemplary PV mount and module;
FIG. 5 is a graph illustrating a total force on the hinge at different wind speeds for an exemplary PV mount and module; and
Fig.6 is a graph illustrating a hinge force ratio between the present and static PV systems mounts at different wind speeds.

For simplicity and clarity of explanation, elements shown in the figures have not necessarily been drawn to scale. For example, the dimensions of some of the elements may be exaggerated relative to other elements.

### DESCRIPTION

The conventional horizontal photovoltaic panel installation is usually tilted towards the South. The photovoltaic panel mount occupies a relatively large (ground surface) footprint. The vertical bifacial photovoltaic module mount installations generate similar electric power and occupy a significantly smaller footprint. The ground surface available for conventional photovoltaic modules horizontally mounted installations is limited. A dual-use vertical photovoltaic panel helps to overcome this limitation.,

The dual-use photovoltaic applications are mainly useful for agriculture and solar fences around infrastructure installations, roads, and railways. In all these applications, the vertical photovoltaic module or panel mount, characterized by a minimal possible footprint, easy maintenance, and relatively low cost, provides significant advantages relative to other types of photovoltaic module mounts.

Vertical PV mount requires high stiffness to withstand the wind load. Such high stiffness is usually reached by using massive posts and crossbeams holding the PV modules and inserting such posts deeply (2 m - 3 m) into the ground. Such massive construction leads to a high cost for the mount. The high cost limits the proliferation of vertically mounted PV mounts in dual-use PV applications.

Therefore, a technical challenge is providing a cost-effective mount for vertical PV modules supporting proper wind load resistance. The current disclosure describes a solution for the vertically mounted PV modules. The disclosed photovoltaic module mount significantly reduces the required mount stiffness and, consequently, the mounting cost.

The presented solution, termed as an aerodynamic or a flapping mount, facilitates free rotation of the PV module around the pivot located above the center of mass of the PV module. The wind directed towards the PV module plane lifts or tilts the PV module and rotates it around the pivot. Therefore, the wind load acts against the PV module weight: the higher the wind speed, the greater the tilt angle of the PV module plane relative to the vertical plane. The PV module will be positioned close to the horizontal plane in the extreme case of very high wind speed. Therefore, the drag force on the posts holding the PV module with the help of hinges or bearings is always reduced. Since the pivot is located above the center of mass of the PV module after the wind drops, the gravitation force returns the PV module to the original vertical position.

The following description presents various aspects of the present solution. For the purpose of explanation, specific configurations and details are set forth in order to provide a thorough understanding of the present disclosure. However, it will also be apparent to one skilled in the art that the present system and method could be practiced without the specific details presented herein. Not to obscure the present disclosure, some known features have been omitted or simplified.

The disclosure supports the use of vertical photovoltaic modules in different dual- use applications: Agri-PV. fences around settlements, water reservoirs, fences along roads and railways, and fences around large conventional horizontal PV installations.

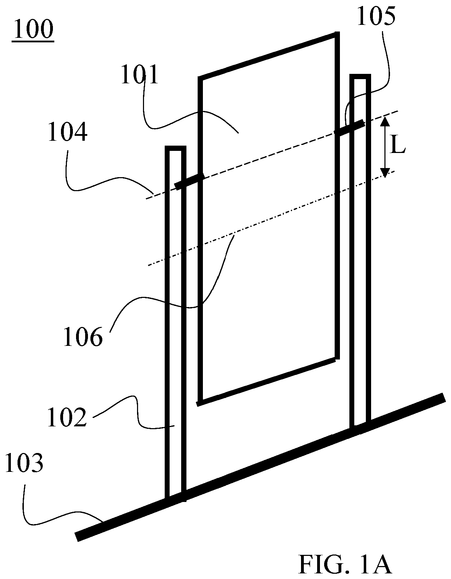

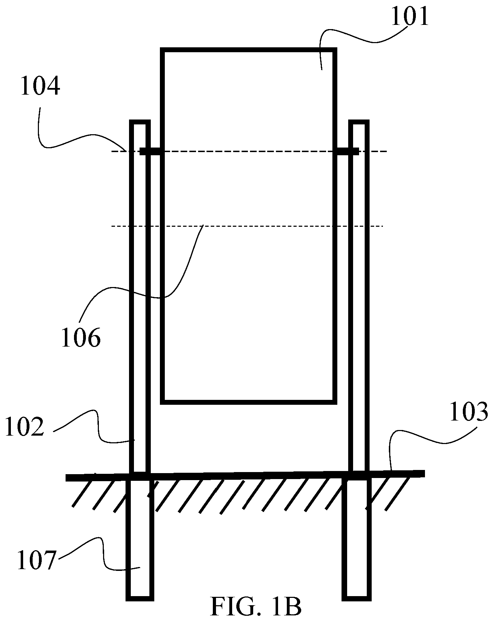

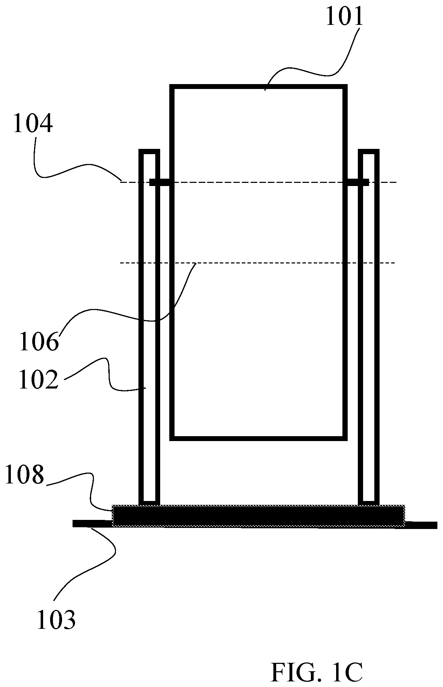

FIG. 1A is a schematic view of an example of a vertical photovoltaic module mount 100. For the simplicity of the explanation, the assembly of photovoltaic elements forming the photovoltaic module are not shown. Two vertical posts 102 support PV module 101 from both sides of the module (panel). Posts 102 are anchored to the ground 103. The PV module 101 has freedom of rotation around pivot 104, A pair of hinges 105 connect the PV module 101 to vertical posts 102 and could be friction hinges or ball bearings. The pivot 104 is coaxial and coincides with the axes of hinges 105, that is parallel to the ground. Pivot 104 is located above the horizontal line 106, crossing the center of PV module mass at a distance L. In FIG. 1B, posts 102 are mounted inside the ground with the help of insertions 107. The depth of the insertions depends, on the one hand, on the expected load forces (under a wind load) and, on the other hand, on the ground structure (earth, sand, stone, rock, etc.) and could be in a range of 0.5 m to 3 m. FIG. 1C is an example of vertical posts 102 connected to a concrete pedestal 108, which provides the required stiffness and stability to the whole mount. Such pedestals, having inserted screws to connect the post undercarriages (not shown), may simplify and accelerate the installation of the vertical PV system. Other ways of anchoring the posts 102 to the ground are also possible.

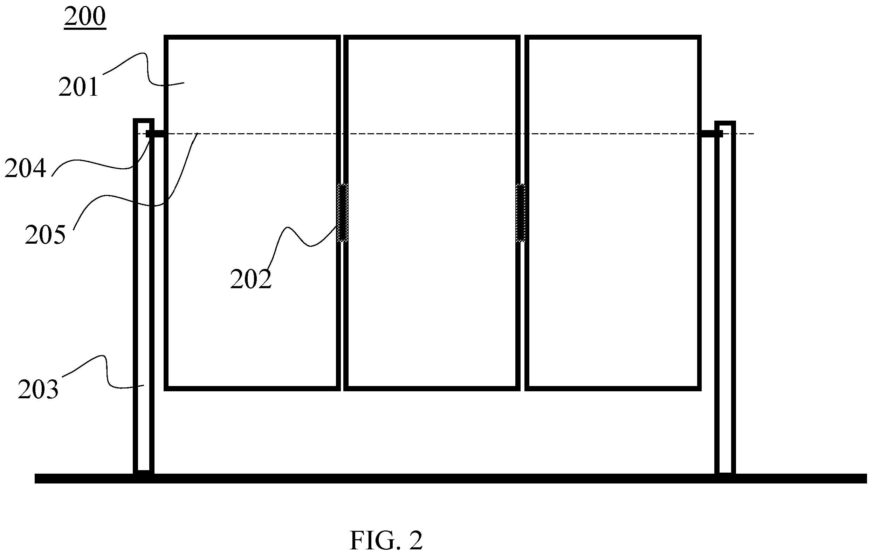

The PV system presented in FIG. 1 is one of the possible configurations. Other possible configurations, which may differ in the amount of PV modules between the posts and the PV module orientation, like portrait and landscape, could be used. According to the current disclosure, FIG. 2 is a schematic view of a photovoltaic system, including three PV modules supported by two vertical posts. Three PV modules 201 are connected between them, e.g., by screws or slats 202. The three modules 201 are connected to two posts 203 by hinges 204, facilitating their joint free rotation around a pivot 205.

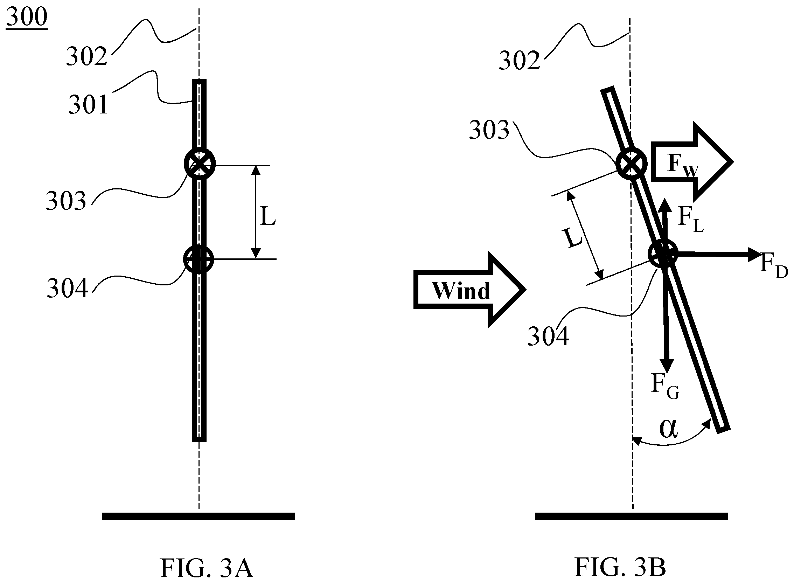

FIG. 3A is a schematic illustration of a side view of the PV mount 300 in the absence of wind. The posts were removed for clarity. FIG. 3A schematically shows a side view PV module 300, located in a vertical plane 302. PV module 300 has freedom of rotation around pivot 303. Pivot 303 is located above the center of mass 304 at a distance L. FIG. 3A shows a nominal position of a vertically mounted PV module in the absence of winds directed towards the PV module perpendicularly to the PV module plane.

FIG. 3B is a schematic illustration of the PV module under a wind load directed toward the PV plane. Wind load causes two types of aerodynamic forces applied to the PV module 301: a Drag force FD and a Lift force FL, which create a momentum force, rotating the PV module around the pivot 303. At the same time, a Gravitation force FG, schematically applied to the center of mass 304, creates a momentum force in the opposite direction. At each wind speed value, there is a tilt angle α, at which both forces (FG and FL) are balanced. Unlike a prior art static vertical mount, in which all the wind load is applied to the posts, in the current solution, most of the wind load acts against the PV module weight forcing the rotation of the P V module, so the load on the posts is significantly reduced.

The simplified calculations of the aerodynamic forces and tilt angles at different wind speeds are made on a base of a theoretical simulation approach presented in the paper of Bruce Kakimpa et. al, mentioned above. The calculations are made, for example, for a bifacial PV module JAM72D30 525-550/MB manufactured by JA Solar (Beijing, China), having dimensions of 2255 mm x 1134 mm and a weight of 31.6 kg. The distance L is assumed, for example, to be 0.5 m and may be optimized per specific design of the PV module and of the mount. All the calculations are carried out for a quasi-stationary PV module state, assuming that the wind velocity is constant.

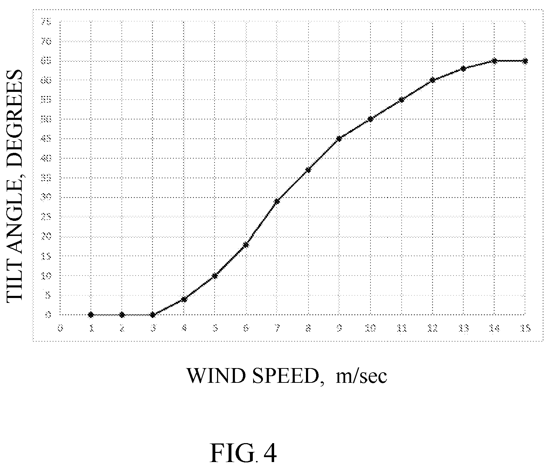

FIG. 4 shows PV module tilt angle at different wind speeds. The calculated PV panel tilt angles at different wind speeds in a range of 0 to 15 m/sec, which are typical for most of country territory at relatively low heights of the mount (< 3 m). At zero wind speed, the PV module is vertical (α=0, FIG.3), and the lateral load on the PV mount is zero. At low wind speeds (<5 m/sec), which is typical for most of the time in many geographic regions, the PV panel tilt is relatively small (< 10°). Accounting that in an actual PV mount, there is always certain friction in the bearings; at such low wind speeds, the PV module practically remains close to vertical. At wind speeds in the range of 5 to 8 m/sec, which is typical for some periods of time, mainly in shapes of "long gusts", i.e., lasting period of above 10 seconds, the wind may rotate the PV module to an angle of about 40° from the vertical while at a very high wind speed of about 15 m/sec (in case of storm) the tilt angle a may reach 65°. Practically, the PV module cannot reach the horizontal plane (α=90°) as the lifting forces (the product of the lift and drag forces) are too small to balance the module weight.

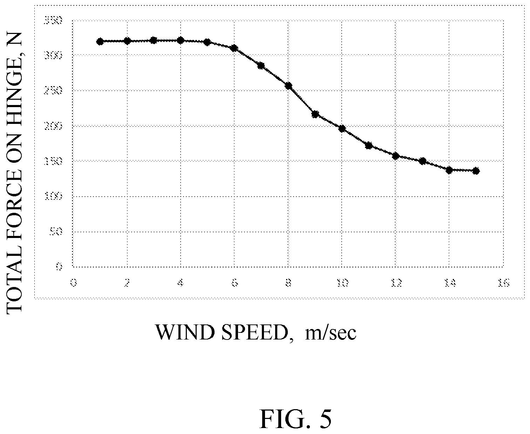

FIG. 5 shows a calculated load force on the hinges for the same example of the PV module. The closer the PV module is to the horizontal plane (α= 90°), the lower the load on the hinges. It is important to mention that the maximum load on the mount is about 320 N (about 32 kg), which does not grow with wind speed increase.

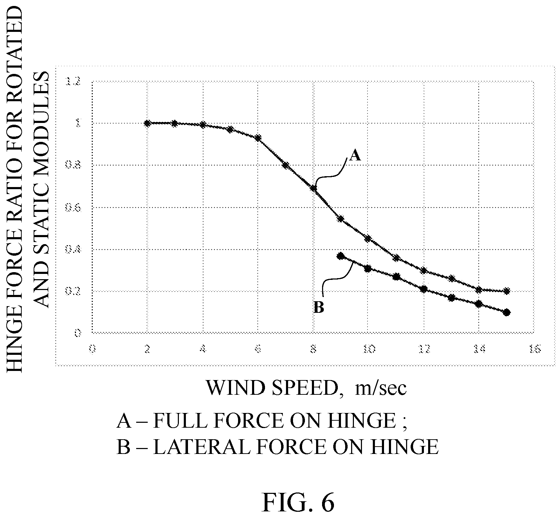

FIG. 6 is a graph illustrating a hinge force ratio between the present flapping (aerodynamic) and static PV systems mounts at different wind speeds. The force is applied to the hinges of two types of vertical PV mounts: the aerodynamic mount and the static mount (the PV panel is stationary). Curve A shows a full force acting on the hinges of the PV mount, and curve B shows the lateral force F_{W}, parallel to the ground, as shown in FIG. 3B. Lateral force is important for designing the posts anchoring to the ground because it creates a significant torque (having a large arm of about 2 m in the present example). FIG. 6 shows that in the case of flapping mount as in the disclosed solution, compared to the static PV mount, it is possible to use low-mass posts, and the insertion of the posts into the ground (i.e., the ground reaction to an external torque) can also be much shorter. Although the theoretical calculation used is a simplified approximation of the actual situation at the installation site, it indicates a clear difference in the needed stiffness in this aerodynamic solution relative to the static mount.

Practical implementation of the disclosed solution is simple and has a lower cost. The posts are less robust and could be made of standard steel or aluminum profiles manufactured in mass production by roll-forming, sheet metal bending, or extrusion. The vertical posts supporting the PV module could be inserted into the ground to a shallower depth of less than 3.0 meter. The hinges may be low-cost bearings, e.g., pillow block bearings of KP series being distributed by AliExpress web store. Additionally, the advantage of such bearings is a large tolerance to axial misalignment, which makes installing the PV system easier, and in a real site with non-ideal topography.

While the apparatus and method have been described with respect to a limited number of examples, these should not be construed as limitations on the scope of the apparatus and method. Other possible variations, modifications, and applications are also within the scope of the disclosure. The invention is defined in the claims.

## Claims

1. A method of reducing the wind load resistance of a vertically mounted bifacial photovoltaic (PV)
module (101, 201, 301), comprising:
providing two vertical posts (102, 203) anchored to the ground (103) for supporting at least one photovoltaic module (101, 201, 301) on both lateral sides of at least one PV module (101, 201, 301),
providing at least one photovoltaic module (101, 201, 301) with a pair of hinges (105, 204) that connect the at least one PV module (101, 201, 301) to the vertical posts (102, 203), facilitating a free rotation of the at least one photovoltaic module (101, 201, 301);
locating a pivot (104, 205, 303) associated with the pair of hinges (105, 204) above the center of mass (304) of at least one PV module (101, 201, 301); and
when a wind load acts on the vertically mounted photovoltaic module (101, 201, 301), the wind load tilts the photovoltaic module (101, 201, 301) around the pair of hinges (105, 204) into a position with reduced drag force acting on the two vertical posts (102, 203).

2. The method of claim 1, wherein the two vertical posts (102, 203) are standard steel or aluminum profiles manufactured by roll-forming or sheet metal bending or extrusion.

3. The method of claim 2, wherein inserting the vertical posts (102, 203) supporting the at least one PV module (101, 201, 301) into the ground (103) to less than three-meter depth.

4. The method of claim 1, wherein the wind load acting against the at least one PV module weight forces the rotation of the at least one PV module (101, 201, 301).

5. The method of claim 4, wherein the rotation of the at least one PV module (101, 201, 301) reduces the load on the vertical posts (102, 203) and hinges (105, 204).

6. The method of claim 4, comprising utilizing the weight of the at least one PV module (101, 201, 301) to return the photovoltaic module (101, 201, 301) to the original vertical position.

7. A vertically mounted photovoltaic (PV) system (100, 200, 300) comprising:
at least one PV module (101, 201, 301) and a PV module mount, including two vertical posts (102, 203) anchored to the ground (103) and configured to support at least one photovoltaic module (101, 201, 301) at both lateral sides of the module; and
a pair of hinges (105, 204) that connect the at least one PV module (101, 202, 301) to the vertical posts (102, 203) and a pivot (104, 205, 303) coaxial with the hinges (105, 204) and located above the center of mass (304) of the at least one PV module (101, 201, 301), the pivot (104, 205, 303) supports a free rotation of the at least one photovoltaic module (101, 202, 301); and
wherein the vertically mounted PV module (101, 201, 301) rotates under a wind load and locates at a tilt angle (α) that reduces the wind load on the hinges (105, 204) and vertical posts (102, 203); and the at least one photovoltaic module (101, 201, 301) returns to the vertical position after the wind load drops.

8. The vertically mounted PV system (100, 200, 300) of claim 7, wherein at least one PV module (101, 201, 301) is a bifacial PV module.

9. The photovoltaic system (100, 200, 300) of claim 7, wherein the vertical posts (102, 203) supporting the at least one PV module (101, 201, 301) are made from standard steel or aluminum profiles.

10. The photovoltaic system (100, 200, 300) of claim 7, wherein the vertical posts (102, 203) supporting the at least one PV module (101, 201, 301) are inserted into the ground (103) to a depth of less than 3.0 meter.

11. The photovoltaic system (100, 200, 300) of claim 7, wherein with the increase of wind load the at least one PV module (101, 201, 301) rotates to reduce the wind load on the vertical posts (102, 203) and hinges (105, 204).

12. The photovoltaic system (100, 200, 300) of claim 11, wherein when the wind load is reduced, the weight of the at least one PV module (101, 201, 301) and center of mass (304) located below the pivot axis (104, 205, 303) returns the at least one photovoltaic module (101, 201, 301) to the original vertical position.

13. The photovoltaic system (100, 200, 300) of claim 7, wherein the tilt angle (α) that reduces the wind load on the hinges (105, 204) and vertical posts (102, 203) is less than 90 degrees.

## Patentansprüche

1. Verfahren zum Reduzieren des Windlastwiderstands eines vertikal montierten bifazialen Photovoltaikmoduls, PV-Moduls , (101, 201, 301), umfassend:
Bereitstellen von zwei vertikalen Pfosten (102, 203), die in dem Boden (103) verankert sind, zum Stützen von mindestens einem Photovoltaikmodul (101, 201, 301) auf beiden lateralen Seiten von mindestens einem PV-Modul (101, 201, 301),
Bereitstellen mindestens eines Photovoltaikmoduls (101, 201, 301) mit einem Paar von Scharnieren (105, 204), die das mindestens eine PV-Modul (101, 201, 301) mit den vertikalen Pfosten (102, 203) verbinden, wodurch eine freie Drehung des mindestens einen Photovoltaikmoduls (101, 201, 301) erleichtert wird;
Positionieren eines Drehpunkts (104, 205, 303), der dem Paar von Scharnieren (105, 204) zugeordnet ist, über dem Massenmittelpunkt (304) mindestens eines PV-Moduls (101, 201, 301); und wenn eine Windlast auf das vertikal montierte Photovoltaikmodul (101, 201, 301) einwirkt, kippt die Windlast das Photovoltaikmodul (101, 201, 301) um das Paar von Scharnieren (105, 204) in eine Position mit reduzierter Schleppkraft, die auf die zwei vertikalen Pfosten (102, 203) einwirkt.

2. Verfahren nach Anspruch 1, wobei die zwei vertikalen Pfosten (102, 203) Standardstahl- oder Aluminiumprofile sind, die durch Walzenformen oder Biegen bzw. Extrusion von Blech hergestellt werden.

3. Verfahren nach Anspruch 2, wobei das Einführen der vertikalen Pfosten (102, 203), die das mindestens eine PV-Modul (101, 201, 301) stützen, in den Boden (103) bis zu einer Tiefe von weniger als drei Metern.

4. Verfahren nach Anspruch 1, wobei die Windlast, die gegen das Gewicht des mindestens einen PV-Moduls wirkt, die Drehung des mindestens einen PV-Moduls (101, 201, 301) erzwingt.

5. Verfahren nach Anspruch 4, wobei die Drehung des mindestens einen PV-Moduls (101, 201, 301) die Last auf den vertikalen Pfosten (102, 203) und Scharnieren (105, 204) reduziert.

6. Verfahren nach Anspruch 4, umfassend Verwenden des Gewichts des mindestens einen PV-Moduls (101, 201, 301), um das Photovoltaikmodul (101, 201, 301) in die ursprüngliche vertikale Position zurückzuführen.

7. Vertikal montiertes Photovoltaik- (PV-) System (100, 200, 300), umfassend:
mindestens ein PV-Modul (101, 201, 301) und eine PV-Modulhalterung, die zwei vertikale Pfosten (102, 203) beinhaltet, die an dem Boden (103) verankert und dazu konfiguriert sind, mindestens ein Photovoltaikmodul (101, 201, 301) an beiden lateralen Seiten des Moduls zu stützen; und
ein Paar von Scharnieren (105, 204), die das mindestens eine PV-Modul (101, 202, 301) mit den vertikalen Pfosten (102, 203) verbinden, und ein Drehpunkt (104, 205, 303), der koaxial zu den Scharnieren (105, 204) liegt und sich über dem Massenmittelpunkt (304) des mindestens einen PV-Moduls (101, 201, 301) befindet, wobei der Drehpunkt (104, 205, 303) eine freie Drehung des mindestens einen Photovoltaikmoduls (101, 202, 301) stützt; und
wobei sich das vertikal montierte PV-Modul (101, 201, 301) unter einer Windlast dreht und sich in einem Neigungswinkel (α) befindet, der die Windlast an den Scharnieren (105, 204) und vertikalen Pfosten (102, 203) reduziert; und das mindestens eine Photovoltaikmodul (101, 201, 301) in die vertikale Position zurückkehrt, nachdem die Windlast abfällt.

8. Vertikal montiertes PV-System (100, 200, 300) nach Anspruch 7, wobei mindestens ein PV-Modul (101, 201, 301) ein bifaziales PV-Modul ist.

9. Photovoltaiksystem (100, 200, 300) nach Anspruch 7, wobei die vertikalen Pfosten (102, 203), die das mindestens eine PV-Modul (101, 201, 301) stützen, aus Standardstahl- oder Aluminiumprofilen hergestellt sind.

10. Photovoltaiksystem (100, 200, 300) nach Anspruch 7, wobei die vertikalen Pfosten (102, 203), die das mindestens eine PV-Modul (101, 201, 301) stützen, in den Boden (103) bis zu einer Tiefe von weniger als 3,0 Metern eingesetzt sind.

11. Photovoltaiksystem (100, 200, 300) nach Anspruch 7, wobei sich das mindestens eine PV-Modul (101, 201, 301) mit dem Anstieg der Windlast dreht, um die Windlast auf den vertikalen Pfosten (102, 203) und Scharnieren (105, 204) zu reduzieren.

12. Photovoltaiksystem (100, 200, 300) nach Anspruch 11, wobei, wenn die Windlast reduziert ist, das Gewicht des mindestens einen PV-Moduls (101, 201, 301) und Massenmittelpunkts (304), der sich unter der Schwenkachse (104, 205, 303) befindet, das mindestens eine Photovoltaikmodul (101, 201, 301) in die ursprüngliche vertikale Position zurückbringt.

13. Photovoltaiksystem (100, 200, 300) nach Anspruch 7, wobei der Neigungswinkel (α), der die Windlast auf den Scharnieren (105, 204) und vertikalen Pfosten (102, 203) reduziert, kleiner als 90 Grad ist.

## Revendications

1. Procédé de réduction de la résistance à la charge de vent d'un module photovoltaïque (PV) bifacial monté verticalement (101, 201, 301), comprenant les étapes consistant à :
fournir deux montants verticaux (102, 203) ancrés au sol (103) pour supporter au moins un module photovoltaïque (101, 201, 301) sur les deux côtés latéraux dudit au moins un module PV (101, 201, 301) ;
pourvoir ledit au moins un module photovoltaïque (101, 201, 301) d'une paire de charnières (105, 204) qui relient ledit au moins un module PV (101, 201, 301) aux montants verticaux (102, 203), facilitant une libre rotation dudit au moins un module photovoltaïque (101, 201, 301) ;
disposer un pivot (104, 205, 303) associé à la paire de charnières (105, 204) au-dessus du centre de masse (304) dudit au moins un module PV (101, 201, 301) ; et, lorsqu'une charge de vent agit sur le module photovoltaïque monté verticalement (101, 201, 301), la charge de vent incline le module photovoltaïque (101, 201, 301) autour de la paire de charnières (105, 204) dans une position induisant une force de traînée réduite sur les deux montants verticaux (102, 203).

2. Procédé selon la revendication 1, dans lequel les deux montants verticaux (102, 203) sont des profilés standards en acier ou en aluminium fabriqués par profilage, par pliage de tôle ou par extrusion.

3. Procédé selon la revendication 2, dans lequel les montants verticaux (102, 203) supportant ledit au moins un module PV (101, 201, 301) sont insérés dans le sol (103) à une profondeur inférieure à trois mètres.

4. Procédé selon la revendication 1, dans lequel la charge de vent agissant contre le poids dudit au moins un module PV entraîne la rotation dudit au moins un module PV (101, 201, 301).

5. Procédé selon la revendication 4, dans lequel la rotation dudit au moins un module PV (101, 201, 301) réduit la charge sur les montants verticaux (102, 203) et les charnières (105, 204).

6. Procédé selon la revendication 4, comprenant en outre l'étape consistant à utiliser le poids dudit au moins un module PV (101, 201, 301) pour ramener le module photovoltaïque (101, 201, 301) à la position verticale d'origine.

7. Système photovoltaïque (PV) monté verticalement (100, 200, 300) comprenant :
au moins un module PV (101, 201, 301) et un support de module PV, comprenant deux montants verticaux (102, 203) ancrés au sol (103) et configurés pour supporter ledit au moins un module photovoltaïque (101, 201, 301) au niveau des deux côtés latéraux du module ; et
une paire de charnières (105, 204) qui relient ledit au moins un module PV (101, 202, 301) aux montants verticaux (102, 203) et un pivot (104, 205, 303) coaxial avec les charnières (105, 204) et situé au-dessus du centre de masse (304) dudit au moins un module PV (101, 201, 301), le pivot (104, 205, 303) supportant une libre rotation dudit au moins un module photovoltaïque (101, 202, 301) ; et
dans lequel le module PV monté verticalement (101, 201, 301) tourne sous l'effet d'une charge de vent et se positionne à un angle d'inclinaison (α) qui réduit la charge de vent sur les charnières (105, 204) et les montants verticaux (102, 203) ; et ledit au moins un module photovoltaïque (101, 201, 301) revient à la position verticale après la diminution de la charge de vent.

8. Système PV monté verticalement (100, 200, 300) selon la revendication 7, dans lequel ledit au moins un module PV (101, 201, 301) est un module PV bifacial.

9. Système photovoltaïque (100, 200, 300) selon la revendication 7, dans lequel les montants verticaux (102, 203) supportant ledit au moins un module PV (101, 201, 301) sont constitués de profilés standards en acier ou en aluminium.

10. Système photovoltaïque (100, 200, 300) selon la revendication 7, dans lequel les montants verticaux (102, 203) supportant ledit au moins un module PV (101, 201, 301) sont insérés dans le sol (103) à une profondeur inférieure à 3,0 mètres.

11. Système photovoltaïque (100, 200, 300) selon la revendication 7, dans lequel, avec l'augmentation de la charge de vent, ledit au moins un module PV (101, 201, 301) tourne pour réduire la charge de vent sur les montants verticaux (102, 203) et les charnières (105, 204).

12. Système photovoltaïque (100, 200, 300) selon la revendication 11, dans lequel, lorsque la charge de vent est réduite, le poids dudit au moins un module PV (101, 201, 301) et le centre de masse (304) situé sous l'axe de pivot (104, 205, 303) ramènent ledit au moins un module photovoltaïque (101, 201, 301) à la position verticale d'origine.

13. Système photovoltaïque (100, 200, 300) selon la revendication 7, dans lequel l'angle d'inclinaison (α) qui réduit la charge de vent sur les charnières (105, 204) et les montants verticaux (102, 203) est inférieur à 90 degrés.
